# EUROPÄISCHE PATENTSCHRIFT

(11) **EP 2 566 712 B1**
(45) Veröffentlichungstag und Bekanntmachung des Hinweises auf die Patenterteilung: **09.07.2014**
(21) Anmeldenummer: 11720296.0
(22) Anmeldetag: 02.05.2011
(51) Int. Cl.: B60C 19/00

(54) **ELASTISCHER FAHRZEUGREIFEN**
ELASCTIC PNEUMATIC TIRE
PNEUMATIQUE ÉLASTIQUE POUR VÉHICULE

(30) Priorität: 07.05.2010 DE 202010005400 U
(43) Veröffentlichungstag der Anmeldung: 13.03.2013
(73) Patentinhaber: Recticel N.V., 1140 Brussels (BE)
(72) Erfinder: BENOIT, Kristof, B-8790 Waregem (BE)
(74) Vertreter: Haverkamp, Jens
(86) Internationale Anmeldenummer: PCT/EP2011/056969
(87) Internationale Veröffentlichungsnummer: WO 2011/138282

(56) Entgegenhaltungen:
- EP-A1- 2 123 491
- US-A1- 2003 188 817
- US-A1- 2008 099 116

## Beschreibung

Die Erfindung betrifft einen elastischen Fahrzeugreifen mit einem Hohlraum, eingefasst durch einen die Lauffläche tragenden Laufstreifen und einer an jeder Seite des Laufstreifens angeformten Seitenwand, und mit zumindest einem in dem Reifenhohlraum angeordneten schalldämpfenden Einsatz oder einer in dem Reifenhohlraum angeordneten schalldämpfenden Eirisatzanordnung, wobei zwischen dem Schalldämpfungseinsatz oder der Schalldämpfungseinsatzanordnung und der Innenseite des die Lauffläche tragenden Laufstreifens eine sich in Umfangsrichtung des Laufstreifens erstreckende, zumindest in Quer- und/oder Längsrichtung des Laufstreifens luftdurchströmbaren Struktur angeordnet ist.

Derartige Fahrzeugreifen werden bei Kraftfahrzeugen, Anhängern und Aufliegern eingesetzt und auch als Fahrzeugluftreifen bezeichnet. Bei diesen Reifen handelt es sich um Hohlkarnmerreifen, die ihre Stabilität maßgeblich durch einen in den Hohlraum eingebrachten Luftdruck erhalten. Gebildet wird der Hohlraum eines solchen Fahrzeugreifens durch einen die Lauffläche tragenden Laufstreifen. An diesen grenzen beidseitig Seitenwände. Die Seitenwände tragen an ihrem freien Ende jeweils einen Wulst, mit dem der auf eine Felge eines Rades montierte Reifen am Felgenbett sowie am Felgenhorn anliegt. Bei schlauchlosen Reifen liegt der Wulst abgedichtet am Felgenhorn bzw. am Felgenbett an, so dass der durch den Fahrzeugreifen bereitgestellte Hohlraum durch die Felge abgeschlossen ist.

Beim Abrollen der Lauffläche eines solchen Reifens auf einer befestigten Fahrbahn entstehen vor allem durch das in die Lauffläche eingebrachte Reifenprofil Rollgeräusche. Die für die Rollgeräusche .verantwortlichen Resonanzschwingungen werden als Luftschall an die Umgebung und als Körperschall über das Rad, die Fahrzeugradaufhängung und das Chassis in den Innenraum des Fahrzeuges transportiert. Zur Reduzierung der Rollgeräusche, insbesondere von Resonanzschwingungen, sind Fahrzeugreifen entwickelt worden, die zur Schalldämpfung einen Einsatz oder eine entsprechende Einsatzanordnung aufweisen. Ein solcher Schalldämpfungseinsatz ist typischerweise an der Innenseite des Laufstreifens angeordnet. Zum Teil erstrecken sich die Einsätze ebenfalls zumindest teilweise noch entlang der Seitenwände. Als schalldämpfender Einsatz dient typischerweise eine in den Reifenhohlraum eingebrachte Schaumeinlage. Diese ist, wie in DE 30 42 350 A1 beschrieben, mit der Innenseite des Reifens verbunden, beispielsweise mit dieser verklebt oder an dieser anvulkanisiert. In DE 20 2008 009 008 U1 ist ein solcher schallgedämpft ausgeführter Fahrzeugreifen beschrieben, bei dem als schalldämpfender Einsatz eine viskoelastische Schaumeinlage vorgesehen ist.

Obwohl der Einsatz von schallgedämpften Fahrzeugreifen vor allem auch aus Umweltverträglichkeitsgründen sinnvoll ist, haben diese Reifen noch keine breite Markteinführung erfahren. Begründet liegt dieses unter anderem wohl darin, dass sich die Reifen beim Abrollen und vor allem in Kurvenfahrten erwärmen. Auch wenn eine gewisse Erwärmung des Laufstreifens mit seiner Lauffläche zur Erhöhung der Haftung auf einer befestigten Fahrbahn von Vorteil ist, steigt mit zunehmender Erwärmung des Reifens sein Verschleiß. Bei schallgedämpften Reifen erfolgt eine Erwärmung des Laufstreifens allerdings oftmals über einen akzeptablen Erwärmungswert. Infolgedessen ist der Verschleiß eines solchen Reifens gegenüber einem Reifen ohne Schalldämpfung erhöht. Als Grund für die stärkere Erwärmung schallgedämpfter Reifen wird die an der Innenseite des Laufstreifens angeordnete schalldämpfende Schaumeinlage angenommen, die als thermischer Isolator wirkt, wodurch eine Abstrahlung von Wärme in den Reifeninnenraum hinein, wenn überhaupt möglich, behindert ist. Um diesem Nachteil von schallgedämpften Fahrzeugreifen zu begegnen, ist vorgeschlagen worden, in die Schaumeinlage wärmeleitende Partikel einzubringen, durch die eine wärmeleitende Wegsamkeit von der Innenwand des Reifens durch den schalldämpfenden Einsatz hindurch zum Reifenhohlraum bereitgestellt ist, wie dieses beispielsweise in JP 2005-104314 A oder JP 2007-230544 A beschrieben ist. In DE 20 2008 009 008 U1 wird dagegen vorgeschlagen, zur Verzögerung, dass der Reifen seine noch zulässige Spitzentemperatur erreicht, in die Schaumeinlage mikrogekapseltes Phasenübergangsmaterial als Latentwärmespeichermaterial einzubauen. Bei diesem Konzept wird Wärme durch den Phasenübergang dieses Materials verbraucht. Auf diese Weise können Temperaturspitzen beim Fahrbetrieb im Hinblick auf eine Reifenerwärmung gepuffert werden. Diese vorbeschriebenen Lösungen zum Abführen von Wärme von der Innenseite des Laufstreifens des Reifens haben den Nachteil, dass zusätzliches Material in den Schaum eingebracht werden muss, was allerdings eine Erhöhung des Gewichts der schalldämpfenden Schaumeinlage zur Folge hat. Überdies ist bei der Herstellung der Schaumeinlage Sorge dafür zu tragen, dass die eingebauten Partikel sich in einer Anordnung befinden, dass die gewünschte Wärmeabfuhr von der Innenseite des Laufstreifens bestimmungsgemäß erfolgt. Mithin müssen die Partikel zur Ausbildung der gewünschten Wärmeableitungspfade durch die schalldämpfende Schicht hindurch aneinander grenzend sein. Es hat sich gezeigt, dass die Herstellung von Schäumen mit derartigen eingelagerten Partikeln nicht unproblematisch ist.

EP 2 123 491 A1 offenbart eine gattungsgemäße Einrichtung zur Reduzierung von Reifengeräuschen, wobei dennoch ein schnelles und zuverlässiges Abdichten des Reifens möglich ist, wenn der Reifen über einen Nagel gerollt ist und dadurch ein Loch erhält und über das Reifenventil eine Abdichtungsflüssigkeit in den Reifenhohlraum eingebracht wird. Um eine Verteilung der Abdichtungsflüssigkeit auch im Bereich des Schalldämpfungseinsatzes zu erlauben, ist der an der Innenseite des Laufstreifens grenzende Bereich des Schalldämpfungseinsatzes durch eine durch Rillen gebildete Struktur gekennzeichnet. Durch diese Tunnel gelangt die Abdichtungsflüssigkeit auch in den Bereich der Anbindung des Schalldämpfungseinsatzes an das Innere des Laufstreifens. Die Struktur wird durch Aussparungen in dem Material des Schalldämpfungseinsatzes gebildet. Aspekte einer Wärmeabfuhr von der Innenseite des Laufstreifens werden in diesem Dokument nicht behandelt.

Ausgehend von diesem diskutierten Stand der Technik liegt der Erfindung daher die Aufgabe zugrunde, einen eingangs genannten, gattungsgemäßen schallgedämpften Fahrzeugreifen dergestalt weiterzubilden, dass eine wirksame Wärmeabfuhr von der Innenseite des Laufstreifens zur Verhinderung einer Wärmekonzentration an der Reifeninnenseite in besonderer Weise wirksam ist.

Diese Aufgabe wird erfindungsgemäß durch ein Fahrzeugrad mit den Merkmalen des Anspruchs 1 gelöst.

Bei diesem Fahrzeugreifen befindet sich, angeschlossen an die Innenseite des Laufstreifens, mit zumindest einer gewissen Quererstreckung eine Ventilationslage in radialer Richtung zwischen der Innenseite des Laufstreifens und einem Schalldämpfungseinsatz. Durch die Ventilationslage ist eine luftdurchströmbare Wegsamkeit geschaffen, so dass die Innenseite des Laufstreifens, zumindest im Bereich der Erstreckung der Ventilationslage, luftgekühlt ist. Zu diesem Zweck erstreckt sich die Ventilationslage in Umfangsrichtung des Laufstreifens. Vorgesehen sein kann, dass sich die Ventilationslage durchgängig über den gesamten Umfang der Innenseite des Laufstreifens erstreckt. Gleichfalls ist es möglich, die innere Umfangsfläche des Laufstreifens in einzelne Ventilationslagensegmente aufzuteilen, sodass auf diese Weise eine Schalldämpfungseinsatzanordnung gebildet ist. Die Ventilationslage ist konzipiert, dass ein diese durchströmender Luftstrom von der Innenwand des Laufstreifens Wärme aufnehmen und von dieser weg in den Reifenhohlraum transportieren kann. Für diese Zwecke kann der Luftstrom Wärme unmittelbar von der Innenseite des Laufstreifen - also von der Gummioberfläche - aufnehmen oder, wie dieses gemäß einer weiteren Ausgestaltung vorgesehen ist, von einer in Kontakt mit der Innenseite des Laufstreifens stehenden thermisch leitenden Lage, etwa einer Metallfolie. Um einen solchen die Wärme wegführenden Luftstrom durch die Ventilationslage zu generieren, ist diese an die Innenseite des Laufstreifens des Rades in geeigneter Weise angeschlossen. Somit sind unter den Begriff des Angeschlossenseins alle solche Ausgestaltungen zu subsumieren, mit denen dieses erreicht wird. Ein Angeschlossensein der Ventilationslage an die Innenseite des Laufstreifens kann beispielsweise durch Anliegen der Ventilationslage an der Innenseite des Laufstreifens erreicht werden. Ebenfalls ist eine teilweise Abstützung derselben an der Innenseite des Laufstreifens möglich. Möglich ist es auch, die Ventilationslage adhäsiv mit der Innenseite des Laufstreifens zu verbinden. Die vorgenannten Anschlussmöglichkeiten stellen, wie bereits angedeutet, nur beispielhafte Ausgestaltungen dar.

Gemäß einer weiteren Ausgestaltung ist vorgesehen, dass die Ventilationslage ebenso wie die Schalldämpfungslage segmentiert und die einzelnen Elemente mit Abstand zueinander angeordnet sind. Auf diese Weise ist ein Austausch zwischen der in den Ventilationslagen bewegten Luft und der im Reifeninneren vorhandenen möglich. Für die Zwecke der thermischen Kontrolle des Laufstreifens ist dieses beabsichtigt, da auf diese Weise die Innenseite des Laufstreifens gekühlt wird.

Zur Generierung des für die Kühlung der Innenseite des Laufstreifens vorgesehenen Luftstroms wird die Verformung des Reifens beim Abrollen auf einem Untergrund genutzt. Die Reifenverformung beim Abrollen des Reifens auf dem Untergrund, bei welcher Verformung der Laufstreifen umlaufend sukzessive nach innen gedrückt und nach Verlassen des Untergrundes bzw. Abheben von diesem wieder in seine ursprüngliche Lage zurückgeformt wird, wird im Zusammenhang der vorbeschriebenen Luftkühlung genutzt, um einen die Ventilationslage durchströmenden Luftstrom zu generieren. Die Reifenverformung wird nach Art einer peristaltischen Pumpe genutzt. Je nach Konzeption und Geometrie der Ventilationslage und dem Schalldämpfungseinsatz wird in der Ventilationslage der Luftstrom durch die vorbeschriebene Reifendeformation beim Abrollen direkt erzeugt oder ein solcher Luftstrom wird in dem Restreifenhohlraum erzeugt, der wiederum in luftdurchströmbarer Verbindung mit der Ventilationslage steht. Auch eine Kombination der beiden vorbeschriebenen prinzipiellen Luftstromerzeugungsmechanismen ist möglich. Ist eine Luftstromgenerierung unmittelbar in der Ventilationslage gewünscht, weist diese typischerweise elastische Eigenschaften auf. Gemäß dem anderen Prinzip wird durch die Peristaltik des Reifens der Luftstrom in dem Resthohlraum generiert, der infolge der vorbeschriebenen Wegsamkeiten ebenfalls in die Ventilationslage strömt. Um die Ventilationslage durch das Abrollen des Reifens in der vorbeschriebenen Weise sukzessive elastisch zu deformieren und dadurch einen Pumpeffekt in der Ventilationslage auszulösen, ist die Ventilationslage an die Innenseite des Laufstreifens angeschlossen. Dann kann eine Deformation des Laufstreifens auf die Ventilationslage übertragen werden.

Die Ventilationslage kann unmittelbar an die Innenseite des Laufstreifens angeschlossen sein. Möglich ist auch das Vorsehen einer thermisch leitenden Lage, beispielsweise eines Metallgeflechtes, das an der Innenseite des Laufstreifens befestigt ist. Es ist durchaus möglich, dass die thermisch leitende Lage, wenn diese Öffnungen aufweist, durch die Ventilationslage an der Reifeninnenseite anliegend gehalten wird.

Auf der thermisch leitenden Lage ist sodann die Ventilationslage angeordnet. Mittels einer solchen thermisch leitenden Lage kann der Kühleffekt verstärkt werden, da durch diese auch eine Wärmeabfuhr von der Innenseite des Laufstreifens in Richtung zu den Seitenwänden hin und vorzugsweise ebenfalls an den Innenseiten der Seitenwände entlang erfolgen kann. Typischerweise mündet eine solche Wärmeleitende Lage in den Restreifenhohlraum, in die die Wärme abgestrahlt wird. Als Material zum Ausbilden einer solchen Wärme ableitenden Lage wird ein Material einsetzten, welches Wärme gut leitet. Hierbei kann es sich um ein Metallgestrick oder um eine metallische Lochfolie handeln. Auch eine durchgehende Metallfolie ist denkbar.

Die thermisch leitende Lage kann auch zum Anbinden bzw. Anschließen der Ventilationslage an die Innenseite des Reifens genutzt werden. Dieses gelingt, wenn die thermisch leitende Lage einerseits mit der Reifeninnenseite und andererseits mit der Ventilationslage etwa durch einen Kleber, eine Klebeschicht oder durch einen Vulkanisierprozess verbunden ist. Hierfür eignet sich beispielsweise ein die benötigte Breite aufweisendes Gummiband mit einer thermisch leitenden Einlage. Diese kann als Gestrick, Vlies, Folie oder dergleichen mit thermisch leitenden Eigenschaften ausgeführt sein. Möglich ist es auch, die Einlage durch thermisch leitende, in einer Matrix eingebettete Partikel auszubilden.

Bei dem vorbeschriebenen Konzept der Luftkühlung der Innenseite des Laufstreifens oder zumindest eines Teils desselben wird durch den vorbeiströmenden Luftstrom wirksam Wärme von der inneren Oberfläche abgeführt. Besonders wirkungsvoll ist eine Luftkühlung wenn die Ventilationslage in luftdurchströmbarer Verbindung mit dem Resthohlraum des Reifens steht, damit ein Luftaustausch und damit verbunden ein Wärmeaustausch im Zuge der sich mischenden Luftströme einstellt. In Verbindung stehen kann die Ventilationslage mit dem Resthohlraum des Reifens beispielsweise dadurch, dass diese selbst den Resthohlraum, etwa mit ihren Seitenflächen, begrenzt. Ebenfalls ist es möglich, dass der Schalldämpfungseinsatz selbst nicht in Kontakt mit der Innenwand des Laufstreifens und/oder Seitenwände gelangt und somit innerhalb der Ventilationslage gehalten ist. Je nach Konzeption der Ventilationslage und dem schalldämpfenden Einsatz kann jedoch eine bereichsweise Abstützung des Schalldämpfungseinsatzes an der Innenseite des Reifens sinnvoll sein. Möglich sind auch Ausgestaltungen, bei denen der Schalldämpfungseinsatz luftdurchströmbare Durchbrechungen aufweist.

Die vorstehenden Ausführungen machen deutlich, dass es sich bei der Ventilationslage um eine luftstromdurchströmbare Lage handelt, mit der der Schalldämpfungseinsatz zumindest weitestgehend von der Innenwand des Reifens beabstandet wird. Die vorbeschriebene Luftkühlung und damit einhergehende Luftdurchströmbarkeit in dem Aufbau des Reifeninneren zwischen der Innenseite des Reifens und der Schalldämpfungseinsatz hat zudem den Vorteil, dass erstmals auch die zur Innenseite des Laufstreifens weisende Seite des Schalldämpfungseinsatzes für die Zwecke der Schalldämpfung genutzt wird. Mithin ist hierdurch die für die Zwecke der Schalldämpfung wirksame Oberfläche des verwendeten Schalldämpfungseinsatzes nicht unerheblich vergrößert. Damit sind bei diesem Fahrzeugreifen nicht nur seine thermischen Eigenschaften, sondern auch seine Schalldämpfungseigenschaften verbessert. Damit geht einher, dass zum Erreichen einer gleichen Schalldämpfungswirkung bei einem Fahrzeugreifen mit einer Ventilationslage wie vorbeschrieben, der Schalldämpfungseinsatz kleiner und daher gewichtssparender ausgeführt werden kann.

Infolge des Anliegens der Ventilationslage an der Innenseite des die Lauffläche tragenden Laufstreifens kann die wärmeabgebende Oberfläche der Innenseite des Laufstreifens nicht unerheblich vergrößert werden, wenn das zum Aufbau der Ventilationslage verwendete Material zumindest teilweise gut wärmeleitende Eigenschaften aufweist. Dann wirkt das die Ventilationslage aufbauende Material zumindest teilweise nach Art eines an der wärmeabgebenden Innenseite des Laufstreifens anliegenden Kühlkörpers mit der Folge, dass die abzugebende Wärme über eine größere Oberfläche an den vorbeiströmenden Luftstrom abgegeben wird.

Als gut wärmeleitendes Material kann beispielsweise eine aus Metallfasern bereitgestellte Lage, wie etwa ein Metallfaservlies oder Metallgestrick vorgesehen sein. Gemäß einer anderen Ausgestaltung ist vorgesehen, die Ventilationslage aus einem offenporigen Material auszuführen, wobei der Porenhohlraum für die Zwecke des Durchlassens des gewünschten Luftstromes hinreichend groß ist. Eine solche offenporige Lage als Ventilationslage kann beispielsweise durch eine Kunststoff- und/oder Metallwabenstruktur, so genannte Höckerprofilstrukturmatten oder dergleichen bereitgestellt sein. In einem bevorzugtem Ausführungsbeispiel wird als offenporiges Material ein offenporiger Schaum, insbesondere ein offenporiger Polyurethanschaum eingesetzt. Auch der Einsatz von Retikulärschäumen ist möglich, beispielsweise ausgebildet als Retikulärpolyurethanschaum. In einem solchen Schaum können gut wärmeleitende Partikel, beispielsweise die bereits vorerwähnten Metallfasern eingebaut sein. Wenn der Schalldämpfungseinsatz ein Schaumkörper ist, könnte es sich anbieten, die Ventilationslage ebenfalls aus einem Schaum herzustellen, da diese dann aus ein und demselben Grundmaterial hergestellt werden können. Die vorbeschriebene thermisch leitende Ausführung der Ventilationslage kann auch mit einer an der Innenseite des Laufstreifens angeordneten thermisch leitenden Lage, wie dieses bereits vorbeschrieben ist, kombiniert sein.

Im Zusammenhang dieser Ausführungen ist zu verstehen, dass die Ventilationslage im Wesentlichen keine schalldämpfenden Eigenschaften aufweist und der Schalldämpfungseinsatz im Wesentlichen nicht luftdurchströmbar ist. Im Wesentlichen nicht luftdurchströmbar bedeutet, dass der Schalldämpfungseinsatz, wenn offenporig konzipiert, nicht als luftundurchlässig angesprochen werden kann, dass diese Luftdurchlässigkeit jedoch nicht den Anforderungen eines zum Kühlen der Innenseite des Laufstreifens vorgesehenen Luftstromes genügt.

Die Ventilationslage erstreckt sich vorzugsweise umlaufend an der Innenseite des Laufstreifens entlang. Hierbei handelt es sich um eine oder mehrere parallel zueinander angeordnete Ventilationslagen. Diese können einen geraden oder auch mäandrierenden Verlauf aufweisen.

Bei der Ventilationslage des Gegenstandes der Erfindung handelt es sich somit um eine Lage, durch die zwischen einem Schalldämpfungseinsatz und der Innenseite des Reifens eine luftdurchströmbare Wegsamkeit geschaffen ist. Dabei ist vorgesehen, dass der Luftstrom zumindest teilweise an der Innenseite der Laufstreifens des Fahrzeugreifens entlang strömt. Als geeignet wird eine Ventilationslage angesehen, wenn diese eine Luftdurchlässigkeit aufweist, die vorzugsweise größer ist als 500 l/min auf einer Querschnittsfläche von 1 dm², gemessen nach EN/ISO 9237 vorhanden ist. Bevorzugt sind Ventilationslagen, die eine Luftdurchströmbarkeit aufweisen, die größer als 1000 l/min auf einer Querschnittsfläche von dm² aufweisen. Dabei versteht es sich, dass größere Luftdurchlässigkeiten bevorzugt sind. Bei einem Einsatz einer von aus einem Retikulärschaum gebildeten Ventilationslage, können auch Werte von 5.000 l/min oder mehr auf einer Querschnittsfläche von 1 dm² erreicht werden. Die vorgenannten Messungen wurden an Proben mit einer Dicke von 1 cm durchgeführt.

Die Dicke der Ventilationslage hat ebenfalls Einfluss auf die Effektivität des für die Zwecke der Kühlung der Innenseite des Laufstreifens des Reifens generierten Luftstroms. Die Dicke der Ventilationslage ist auch abhängig von der Geometrie und der Größe des Reifens. Einfluss auf die notwendige Dicke einer solchen Ventilationslage hat auch ihre Luftdurchlässigkeit. Dieses bedeutet, dass eine Ventilationslage mit einer hohen Luftdurchlässigkeit grundsätzlich eine geringere Dicke aufweisen kann als eine solche mit einer geringeren Luftdurchlässigkeit. Unter Berücksichtigung dieser Vorgaben lassen sich Ventilationslagen mit Dicken von 0,5 cm ausbilden. Typischerweise wird die Dicke einer solchen Ventilationslage jedoch 1,5 cm bis 3 cm betragen. In Versuchen wurden zufrieden stellende Ergebnisse mit Ventilationslagen mit einer Dicke von 2 cm und einer Luftdurchlässigkeit von 3000 - 4000 l/min auf einer Querschnittsfläche von 1 dm² erzielt.

Zum weiteren Verbessern einer Kühlung der Innenseite des Laufstreifens kann vorgesehen sein, dass die Ventilationslage und/oder den schalldämpfenden Einsatz bzw. die schalldämpfende Einsatzanordnung mit Mittel auszustatten, die eine turbulente Strömung der durch die Ventilationslage geförderten Luft verursachen. Hierbei kann es sich beispielsweise um Fortsätze an den Seitenflächen der Ventilationslage und/oder dem schalldämpfenden Einsatz handeln. Auch in den Einsatz und/oder die Ventilationslage typischerweise durch Ausstanzen eingebrachte Öffnungen (Perforationen) können diesem Zweck dienen. Zugleich wird durch die vorbeschriebenen Maßnahmen die Oberfläche des Einsatzes vergrößert, was die Schalldämpfung verbessert.

Untersuchungen an Reifen ohne einen Schalldämpfungseinsatz, mit einem solchen und Reifen gemäß dieser Erfindung haben gezeigt, dass bei den Reifen mit der erfindungsgemäßen Ventilationslage zwischen der Innenseite des Laufstreifens und dem Schalldämpfungseinsatz eine stärkere Erwärmung als bei Reifen ohne jedweden Schalldämpfungseinsatz nicht gänzlich zu vermeiden ist. Diese ist jedoch, verglichen mit einer Erwärmung von Reifen mit einem Schalldämpfungseinsatz jedoch ohne Ventilationslage, moderat. Bei Reifen gemäß der Erfindung war eine Erwärmung von nur 50% oder weniger verglichen mit der Erwärmung eines Reifen mit einem gleichen Schalldämpfungseinsatz jedoch ohne Ventilationslage zu beobachten.

Weitere Vorteile und Ausgestaltungen der Erfindung ergeben sich aus der nachfolgenden Beschreibung von Ausführungsbeispielen unter Bezugnahme auf die beigefügten Figuren. Es zeigen:
- **Fig. 1:**: einen schematisierten Querschnitt durch einen auf die Felge eines Rades montierten Fahrzeugreifen mit einem Schalldämpfungseinsatz und einer Ventilationslage gemäß einem ersten Ausführungsbeispiel,
- **Fig. 2a - 2c:**: Prinzipdarstellungen von weiteren Ausführungsbeispielen eines mit einer Ventilationslage ausgestatteten schallgedämpften Fahrzeugreifens,
- **Fig. 3a, 3b:**: Prinzipdarstellungen eines mit einer Ventilationslage ausgerüsteten schallgedämpften Fahrzeugreifens in einem Längsschnitt jeweils seines unteren Abschnittes,
- **Fig. 4:**: eine Darstellung entsprechend derjenigen der Figuren 3a, 3b mit einer weiteren Ausgestaltung eines schalldämpfenden Einsatzes und einer Ventilationslage,
- **Fig. 5:**: eine Darstellung entsprechend derjenigen der Figur 4 mit einer weiteren Ausgestaltung einer Ventilationslage mit einem darauf angeordneten schalldämpfenden Einsatz,
- **Fig. 5a, 5b:**: weitere Ausgestaltungen einer Ventilationslage mit einem jeweils darauf angeordneten schalldämpfenden Einsatz zu der Ausgestaltung der Figur 5 in,
- **Fig. 6, 6a, 6b:**: weitere Ausgestaltungen einer Ventilationslage mit einem jeweils darauf angeordneten schalldämpfenden Einsatz in einer Schnittdarstellung entsprechend derjenigen der Figur 5 (Figur 6) sowie in einer Draufsicht auf die Innenseite des Laufstreifens (Figur 6a) und in einer Variante (Figur 6b),
- **Fig. 7a, 7b:**: ein Einsatz für einen elastischen Fahrzeugreifen umfassend eine Schalldämpfungslage sowie darin eingebrachte Ventilationslagen,
- **Fig. 8a - 8g:**: Prinzipdarstellungen von verschiedenen Einheiten, jeweils gebildet aus einer Ventilationslage und einem Schalldämpfungseinsatz in schematisierten Teilquerschnitten durch ein Fahrzeugreifen und
- **Fig. 9:**: ein Teillängsschnitt durch ein Fahrzeugreifen mit einer darin eingesetzten Einheit, bestehend aus einer Ventilationslage und einem Schalldämpfungseinsatz.

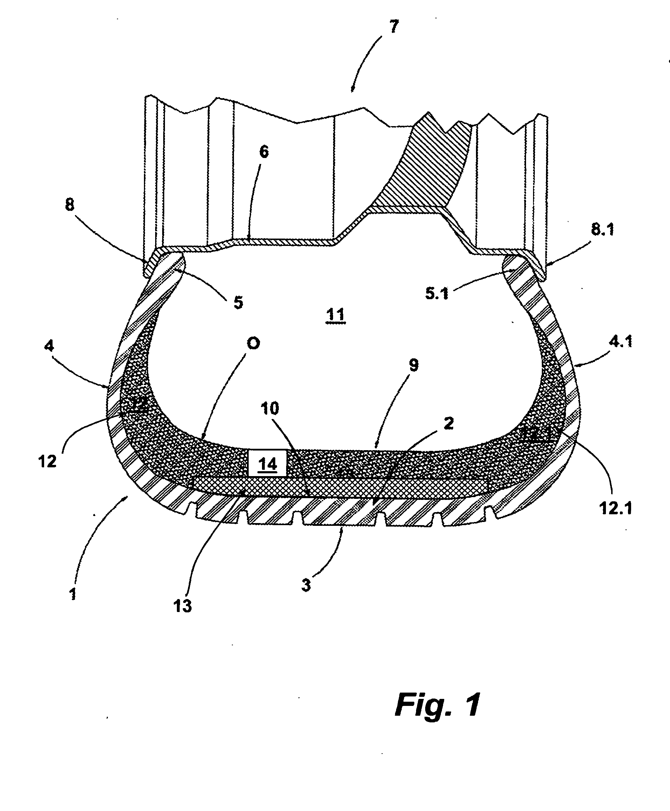

Ein Fahrzeugreifen 1 aus Gummi bzw. einer Gummimischung verfügt über einen Laufstreifen 2, dessen Außenseite die Lauffläche 3 des Fahrzeugreifens 1 bildet. An den Laufstreifen 2 sind zwei Seitenwände 4, 4.1 angeformt. Die Seitenwände 4, 4.1 tragen an ihrem Ende jeweils einen Wulst 5, 5.1. Der Einfachheit halber ist der Fahrzeugreifen 1 ohne eine Verstärkung und ohne Karkasse gezeigt. Gleichfalls ist der in den Wülsten 5, 5.1 typischerweise enthaltene Wulstkern nicht dargestellt. Der Fahrzeugreifen 1 ist, wie in Figur 1 dargestellt, auf die Felge 6 eines Rades 7 montiert. Die Wülste 5, 5.1 liegen auf dem Felgenbett auf und sind durch den Reifeninnendruck mit ihren Wülsten 5, 5.1 gegen das jeweils angrenzende Felgenhorn 8, 8.1 angedrückt.

In dem Fahrzeugreifen 1 ist eine insgesamt mit dem Bezugszeichen 9 gekennzeichnete viskoelastische Schaumeinlage angeordnet. Die Schaumeinlage 9 ist mit der Innenseite 10 des Fahrzeugreifens 1 an denjenigen Stellen adhäsiv verbunden, an denen die Schaumeinlage 9 unmittelbar an der Innenseite 10 des Reifens 1 anliegt. Bei einer Rotation des Fahrzeugreifens 1 rotiert somit die mit dem Fahrzeugreifen 1 verbundene Schaumeinlage 9 mit. Die Schaumeinlage 9 füllt den durch den Laufstreifen 2 und die Seitenwände 4, 4.1 gebildeten Hohlraum 11 des Fahrzeugreifens 1 zu etwa 30 % aus. Die Schaumeinlage 9 folgt bei dem dargestellten Ausführungsbeispiel der Innenkontur des Fahrzeugreifens 1, wobei vorgesehen ist, dass die Dicke der Schaumeinlage 9 im Bereich des Laufstreifens 2 größer ist als in den angrenzenden Seitenwandabschnitten 12, 12.1, in denen die Schaumeinlage 9 in Richtung zu den Wülsten 5, 5.1 hin ausdünnt. Die Seitenwandabschnitte 12, 12.1 verlaufen mit ihrer den Hohlraum 11 begrenzenden Oberfläche zumindest teilweise parallel oder in einem geringen Winkel geneigt gegenüber der inneren Oberfläche des Fahrzeugreifens 1.

Die Schaumeinlage 9 dient zur Dämpfung der Resonanzen des eingeschlossenen Luftvolumens, kombiniert mit einem hohen Dämpfungsvermögen vor allem in einem Frequenzbereich von weniger als 400 Hz und insbesondere in einem Frequenzbereich zwischen 200 und 250 Hz. Die gezeigte Geometrie der Schaumeinlage 9 mit ihrem Basisabschnitt und den Seitenwandabschnitten 12, 12.1 macht deutlich, dass eine Schwingungsdämpfung des elastischen Fahrzeugreifens 1 nicht nur im Bereich des Laufstreifens 2, sondern auch im Bereich der Seitenwände 4, 4.1 stattfindet. Insgesamt ist somit die Schaumeinlage 9 U-förmig ausgebildet.

Durch die Schaumeinlage 9 ist der durch den Fahrzeugreifen 1 ursprünglich bereitgestellte Reifenhohlraum reduziert. Daher wird im Rahmen dieser Ausführungen der verbliebene Reifenhohlraum 11 auch als Restreifenhohlraum angesprochen.

Von der schalldämpfenden Schaumeinlage 9 eingefasst, ist eine Ventilationslage 13. Die Ventilationslage 13 befindet sich zwischen der Innenseite 10 des Laufstreifens 2 und der Schaumeinlage 9. Die Ventilationslage 13 ist bei dem dargestellten Ausführungsbeispiel als offenporiges Schaumteil ausgeführt, geeignet, damit in dieser ein Luftstrom strömen kann, der zumindest teilweise an der Innenseite 10 des Laufstreifens 12 vorbei strömt. Die Ventilationslage 13 verfügt über keine nennenswerten schalldämpfenden Eigenschaften. Die Schaumeinlage 9 ist hingegen quasi nicht, zumindest nicht hinreichend, luftdurchströmt. Die Ventilationslage 13 dient zum Abführen von Wärme von der Innenseite 10 des Laufstreifens 2 während des Abrollvorganges des Reifens 1. Ausgenutzt wird hierbei die elastische Arbeit des Fahrzeugreifens 1 und der Umstand, dass die Wärmeproduktion Folge der Deformationsarbeit beim Abrollen auf einem Untergrund und der damit einhergehenden Verformung ist, während ebenfalls infolge der Rotation der Reifen 1 in seinen übrigen Abschnitten luftgekühlt wird. Zweckmäßigerweise sind in die Schaumeinlage 9 beispielsweise versetzt zueinander angeordnete Durchbrechungen 14 eingebracht, um einen Luftstromaustausch zwischen der im Hohlraum 11 des Reifens 1 befindlichen Luft mit dem in der Ventilationslage 13 generierten Luftstrom zu gestatten. Hierdurch ist eine Wärmeabfuhr von der Innenseite 10 des Laufstreifens 2 zum Kühlen desselben gegenüber einer Ausgestaltung ohne Durchbrechungen verbessert. Die Durchbrechungen 14 verfügen zu diesem Zwecke über einen hinreichend großen durchströmbaren Querschnitt. Gleichzeitig ist die Anzahl der Durchbrechungen 14 hinreichend groß, um eine Luftzirkulation zwischen dem Hohlraum 11 und der Ventilationslage 13 zu gestatten. Die Ventilationslage 13 ist zu diesem Zweck in allen Richtungen gleichermaßen luftdurchströmbar.

Das Einbringen von Durchbrechungen in die Ventilationslage 13 vergrößert zudem die nutzbare Oberfläche der Schaumeinlage 9 für die gewünschten Dämpfungszwecke, da auch die Mantelflächen der Durchbrechungen 14 schall- bzw. resonanzdämpfend sind.

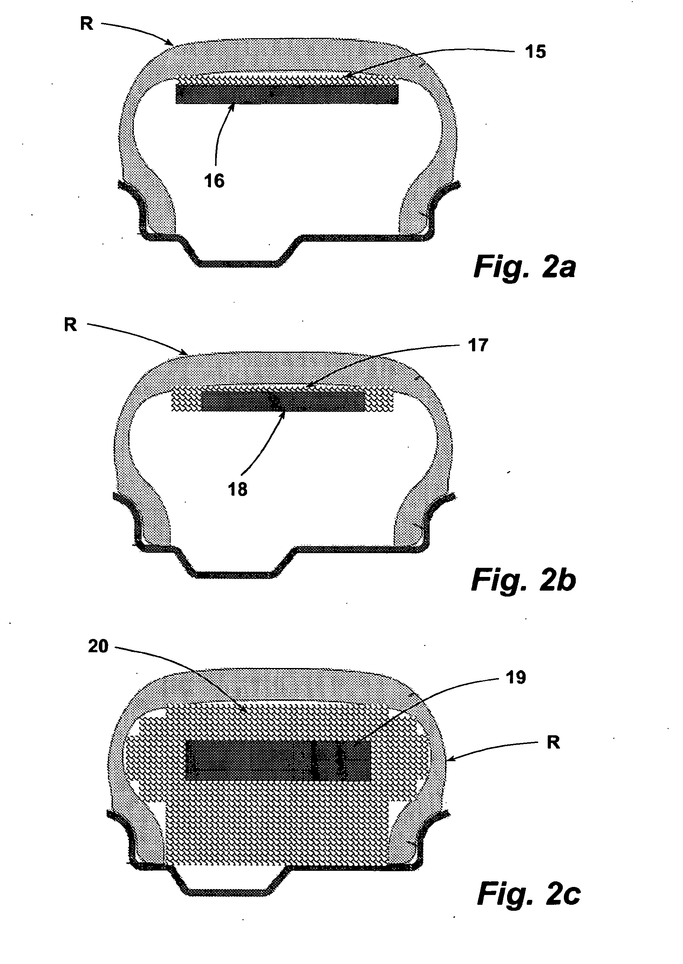

In Figuren 2a - 2c sind schematisiert weitere Ausführungsbeispiele von unterschiedlichen Anordnungen von schalldämpfenden Einsätzen und Ventilationslagen gezeigt. Bei dem Ausführungsbeispiel der Figur 2a erstreckt sich die Ventilationslage 15 mit ihrem seitlichen Abschluss bis zum seitlichen Abschluss des Schalldämpfungseinsatzes 16. Bei dieser Konzeption wird somit der Resthohlraum des Fahrzeugreifens R ebenfalls durch Teile der Ventilationslage 15 begrenzt. Mithin steht diese in unmittelbarem Luftaustausch mit dem Reifenhohlraum.

Gleiches ist ebenfalls bei dem Ausführungsbeispiel der Figur 2b gegeben. Bei diesem erstreckt sich die Ventilationslage 17 seitlich um den Schalldämpfungseinsatz 18 herum.

In dem Ausführungsbeispiel der Figur 2c ist der Schalldämpfungseinsatz 19 insgesamt in einer Ventilationslage 20 aufgenommen. Bei diesem Ausführungsbeispiel ist im Wesentlichen der gesamte Hohlraum des Reifens R mit dem Material der Ventilationslage 20 gefüllt. Bei einer Ausgestaltung, bei der der Schalldämpfungseinsatz von dem die Ventilationslage bildenden Material getragen wird oder der Schalldämpfungseinsatz in die Ventilationslage eingebetet ist, wobei die Ventilationslage sich zumindest über die gesamte Breite des Reifenhohlraums erstreckt, kann diese aus Ventilationslage und Schalldämpfungseinsatz gebildete Einheit form- und/oder kraftschlüssig innerhalb des Reifens gehalten sein. Bei einer solchen Ausgestaltung braucht diese Einheit nicht mit der Innenseite des Reifens verklebt zu werden. Die gewünschte Verbindung mit der Innenseite des Reifens wird zweckmäßigerweise dadurch erreicht, dadurch dass die Einheit in ihrer Breite bezogen auf die Breite des Innenraums des Reifens breiter konzipiert ist und sodann in dieser Richtung unter einer gewissen Vorspannung stehend zwischen den Seitenwänden des Reifens gehalten ist. Infolge dieses Kraftschlusses ist eine Drehmitnahme des Materials der Ventilationslage und damit ebenfalls des Dämpfungseinsatzes gewährleistet. Da bei einer solchen Ausgestaltung auf einen Einsatz einer Klebeschicht zwischen der Innenseite des Fahrzeugreifens und der Ventilationslage verzichtet werden kann, ist dementsprechend der Kühleffekt verbessert. Alternativ oder auch ergänzend hierzu kann eine kraftschlüssige Anlage der aus Ventilationslage bzw. Ventilationsmaterial und Schalldämpfungseinsatz gebildeten Einheit auch in radialer Richtung gegeben sein.

Grundsätzlich eignen sich für die unterschiedlichen Ausgestaltungen einer Ventilationslage verschiedene Materialien, solange sichergestellt ist, dass durch diese ein hinreichender Luftstrom für die gewünschte Wärmeabfuhr strömen kann. Bei den beschriebenen Ausführungsbeispielen ist die Ventilationslage aus einem offenporigen retikulären Polyurethanschaum hergestellt. Dieser dient letztendlich nur als Stützkörper zum Freihalten einer luftdurchströmbaren Wegsamkeit an der Innenseite 10 des Laufstreifens 2.

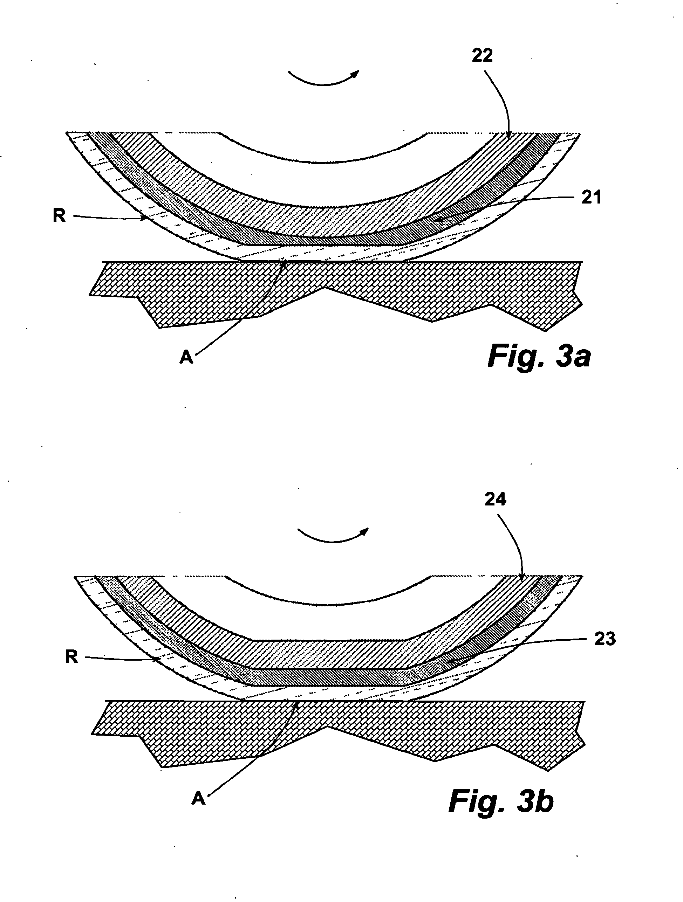

Für die Generierung des bereits vorbeschriebenen luftkühlenden Luftstroms an der Innenseite 10 des Laufstreifens 2 wird jeweils die Deformation des Reifens R beim Abrollen genutzt, wie dieses anhand der Prinzipdarstellungen der Figuren 3a und 3b gezeigt ist. Figur 3a zeigt eine Ausgestaltung, bei der die luftdurchströmbare Ventilationslage 21 leichter deformierbar ist als der innenseitig daran angebrachte Schalldämpfungseinsatz. Durch die Deformation des Reifens R im Bereich seiner in Umfangsrichtung entsprechend der Rotationsgeschwindigkeit gebildeten Aufstandsfläche A wird die Ventilationslage 21 umlaufend eingedrückt und damit hinsichtlich ihrer freien durchströmbaren Querschnittsfläche reduziert. Infolge der Rotation des Reifens R wird auf diese Weise innerhalb der Ventilationslage 21 ein Luftstrom generiert, und zwar nach dem Prinzip einer peristaltischen Pumpe. Infolge des Luftstromes wird die im Bereich der jeweiligen Deformation der Ventilationslage 21 entstehende Wärme unverzüglich abgeführt, und zwar in kühlere Reifenbereiche oder, für den Fall, dass der Schalldämpfungseinsatz 22 Durchbrechungen aufweist oder die Ventilationslage 21 in Querrichtung zur Rotationsrichtung offen ist, erfolgt ein Luftaustausch und dementsprechend eine Wärmeabfuhr mit der im Reifeninneren enthaltenen Luft. Somit wird durch die umlaufende Deformation der Ventilationslage 21 bei einer Rotation des Reifens R durch den entstehenden Luftstrom an der Innenseite 10 des Laufstreifens 2 im Bereich der Deformation durch den sich einstellenden Luftstrom die Wärme unmittelbar mit ihrer Entstehung abgeführt. Ein übermäßiges Erwärmen durch Wärmestau ist somit wirksam verhindert.

Figur 3b zeigt eine Ventilationslage 23, die in Bezug auf den daran angrenzenden Schalldämpfungseinsatz 24 zusammen mit diesem im Zuge des Abrollvorganges des Reifens R nach innen gedrückt wird. Auch bei diesem Ausführungsbeispiel wird ein Luftstrom innerhalb des Reifens R nach den Prinzipien einer peristaltischen Pumpe erzeugt. Bei diesem Ausführungsbeispiel steht die Ventilationslage 23 in einem Strömungsaustausch mit der im Reifeninneren enthaltenen Luft, so dass auf diese Weise ebenfalls die Ventilationslage 23 luftdurchströmt ist.

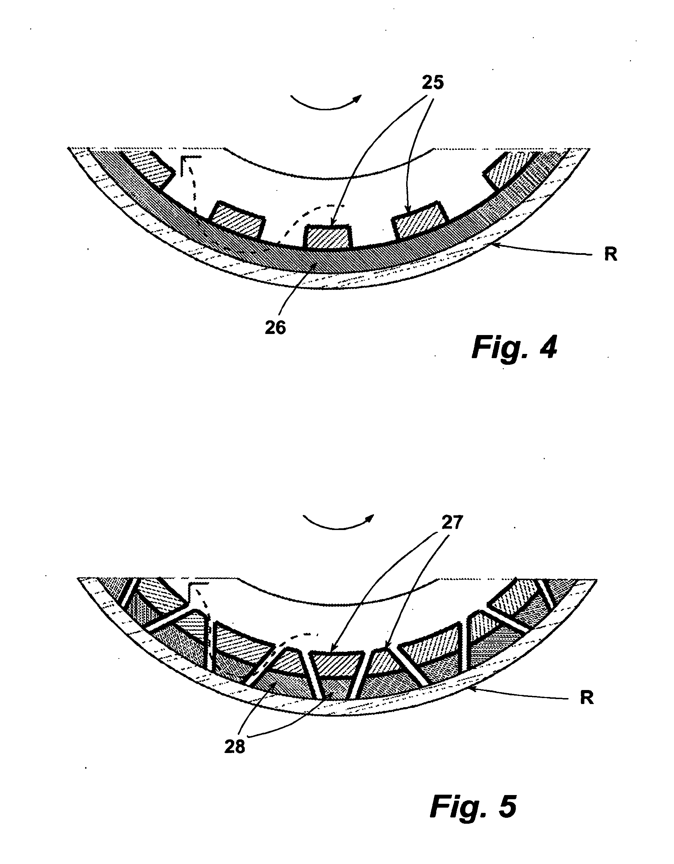

Figur 4 zeigt ein weiteres Ausführungsbeispiel, bei dem eine Schalldämpfungseinsatzanordnung 25 auf einer durchgehenden Ventilationslage 26 angeordnet ist. Bei dieser Ausgestaltung ist die Schalldämpfungseinsatzanordnung durch eine Vielzahl einzelner Schalldämpfungseinsätze gebildet, die jeweils voneinander beabstandet sind. Auf diese Weise ist ein Luftstrom innerhalb der Ventilationslage 26 und infolge der Beabstandung der einzelnen Schalldämpfungseinsätze auch zwischen diesen hindurch und in den Restreifenhohlraum hinein möglich. Bei dem dargestellten Ausführungsbeispiel sind die Schalldämpfungseinsätze rechteckig konzipiert. Diese können auch andere geometrische Querschnitte aufweisen, beispielsweise dreieckförmig sein oder den Querschnitt eines Viertelkreises aufweisen. Bei der Ausgestaltung der Figur 4 können die Schalldämpfungseinsätze luftundurchlässig sein. Möglich ist auch eine Ausgestaltung, bei der die auf der Ventilationslage 26 aufsitzenden Schalldämpfungseinsätze der Schalldämpfungseinsatzanordnung 25 ebenfalls luftdurchlässig sind, vor allem auch in einem gegenüber der Ventilationslage 26 reduziertem Maße.

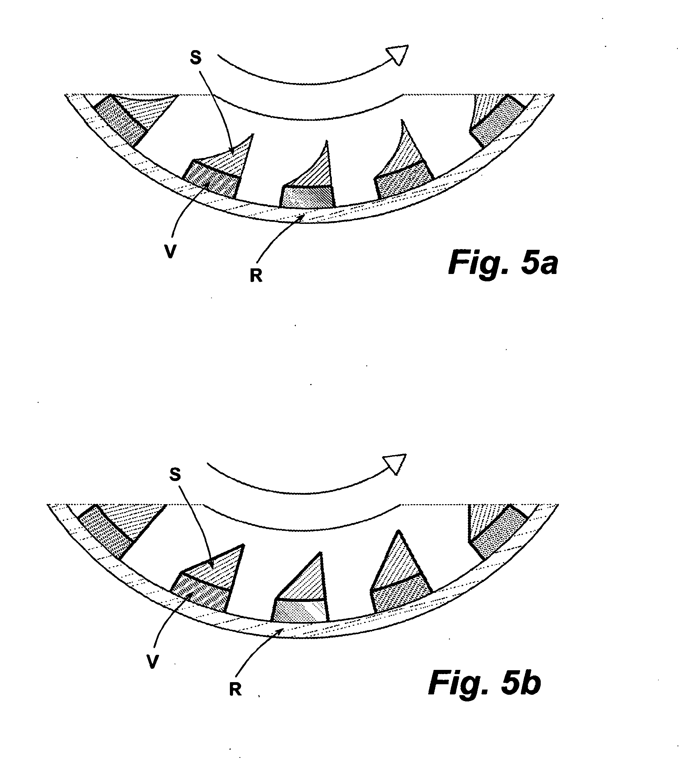

Figur 5 zeigt noch ein weiteres Ausführungsbeispiel, bei dem nicht nur der Schalldämpfungseinsatz segmentiert ist, sondern ebenfalls die Ventilationslage. Der Schalldämpfungseinsatz ist bei diesem Ausführungsbeispiel mit dem Bezugszeichen 27 gekennzeichnet. Die Ventilationslage trägt das Bezugszeichen 28. Die in Figur 5 gezeigte geometrische Anordnung der einzelnen Segmente, jeweils bestehend aus einem Abschnitt der Ventilationslage 28 und einem Abschnitt eines Schalldämpfungseinsatzes 27 ist beispielhaft. Auch diesbezüglich können die voneinander beabstandeten Segmente unterschiedliche Querschnittsformen aufweisen, ebenso wie diese mit einem unterschiedlichen Abstand zueinander angeordnet werden können. Beispiele hierfür sind in den Figuren 5a und 5b gezeigt. Darin sind der Reifen mit dem Bezugszeichen R, die Ventilationslage mit V und der schalldämpfende Einsatz mit S gekennzeichnet.

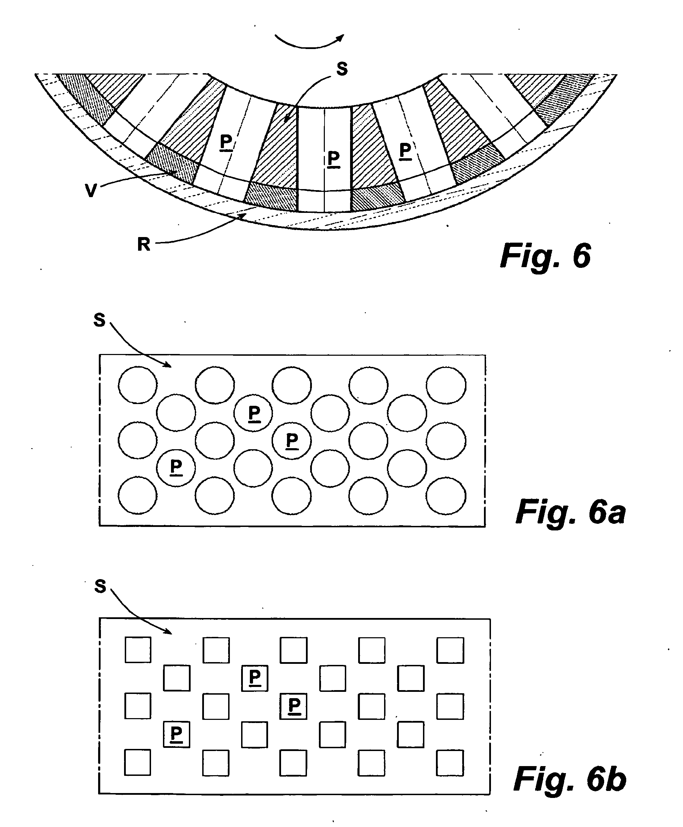

Figur 6 zeigt ein weiteres Ausführungsbeispiel einer in einen elastischen Reifen R eingesetzten und an die Innenseite seiner Lauffläche angeschlossenen Ventilationslage V mit einem darauf angeordneten Schalldämpfungseinsatz S. Der aus Ventilationslage V und Schalldämpfungseinsatz S gebildete Körper ist durch darin eingebrachte Öffnungen P perforiert, und zwar bis zur Innenseite des Laufstreifens des Reifens. Bei dem dargestellten Ausführungsbeispiel weisen die Öffnungen eine gleich bleibende Querschnittsfläche auf. Aus der Draufsicht der Figur 6a auf die in den Hohlraum des Reifens R weisende Oberseite des Schalldämpfungseinsatzes S wird erkennbar, dass die Öffnungen eine kreisrunde Querschnittsgeometrie aufweisen. Alternative Querschnittsgeometrien sind ebenso möglich, etwa eine quadratische, wie dieses in Figur 6b beispielhaft gezeigt ist.

Bei dem in Figur 6 gezeigten Ausführungsbeispiel sind die Öffnungen P fluchtend zueinander durch den Schalldämpfungseinsatz S und die Ventilationslage V hindurch eingebracht worden, typischerweise mittels eines Stanzvorganges. Die Öffnungen des Schalldämpfungseinsatzes können gemäß einer anderen Ausführung auch versetzt zu denjenigen der Ventilationslage angeordnet sein, auch soweit, dass die Öffnungen in der Ventilationslage vollständig von einem Abschnitt des Schalldämpfungseinsatzes bedeckt sind und somit nicht in direkter Verbindung zu dem Reifenhohlraum stehen. Dann werden die Ventilationslage und der Schalldämpfungseinsatz vor ihrer Verbindung unabhängig voneinander perforiert.

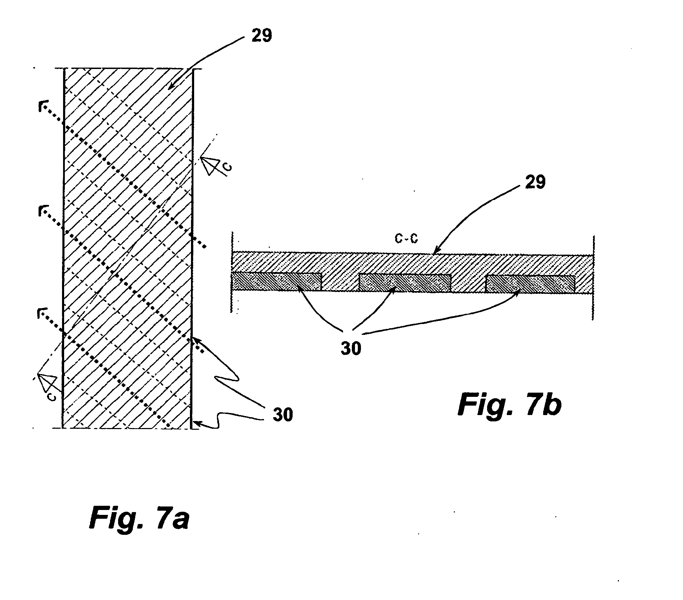

Noch ein weiteres Ausführungsbeispiel einer Anordnung, bestehend aus einem Schalldämpfungseinsatz 29 und einer Ventilationslage 30, ist in Figuren 7a, 7b gezeigt. Figur 7a zeigt eine Draufsicht auf die innere Oberfläche des Schalldämpfungseinsatzes 29. Gestrichelt und mit Pfeilen markiert, ist die Anordnung der mehreren streifenartig konzipierten Ventilationslagen, die diagonal zur Rotationsrichtung, die der Längserstreckung des Schalldämpfungseinsatzes 29 entspricht, verlaufen. Figur 7b zeigt einen Querschnitt entlang der Linie C - C der Figur 7a.

Das Ausführungsbeispiel der Figuren 7a, 7b zeigt, dass durchaus eine gewisse Abstützung des Schalldämpfungseinsatzes an der Innenseite des Laufstreifens eines Fahrzeugreifens möglich ist. Bei dem Ausführungsbeispiel der Figuren 7a, 7b ist diese Abstützung leistenförmig. Diese kann, wenn gewünscht, jedoch auch als inselförmige Abstützung in Form von Säulen oder einzelnen Leisten vorgesehen sein.

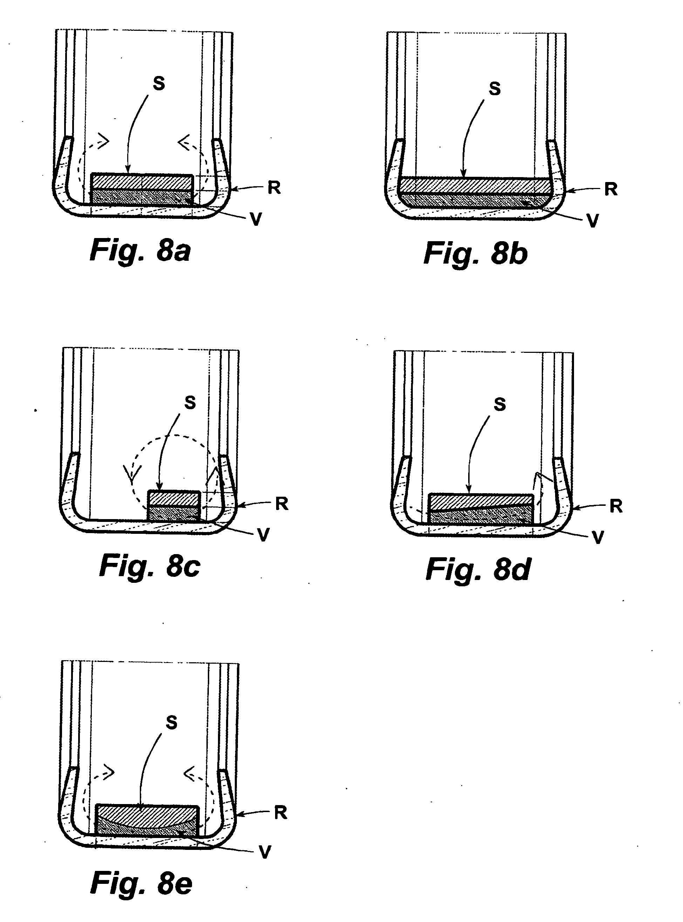

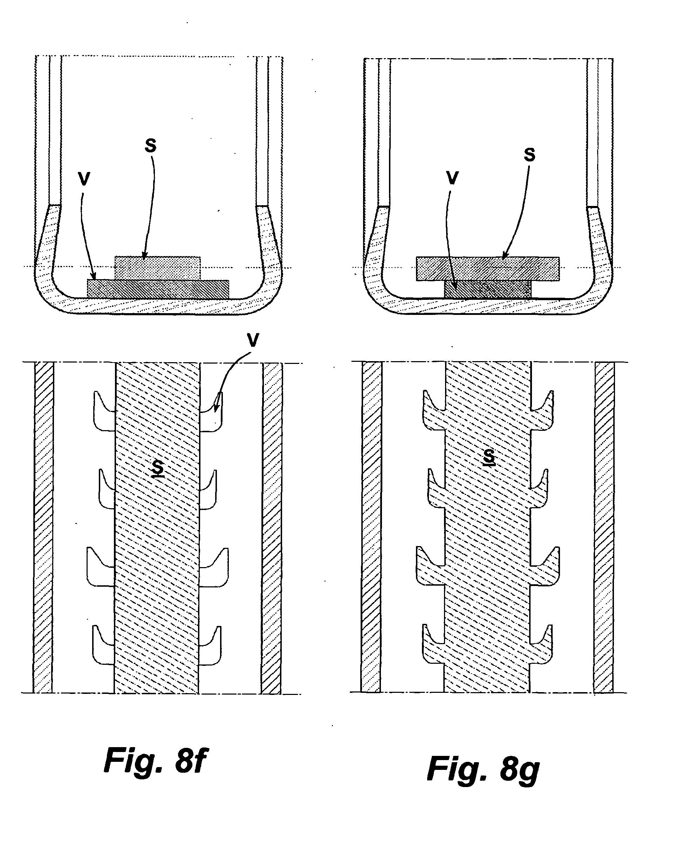

In den Figuren 8a - 8g sind unterschiedliche Anordnungen einer in einen elastischen Fahrzeugreifen R eingesetzten Einheit, jeweils bestehend aus einer Ventilationslage V und einer Schalldämpfungslage S, gezeigt. Gestrichelt sind Luftströmungen eingetragen, die bei einem Abrollen des Reifens auf einem Untergrund generiert werden. Aufgrund der Schnittlage sind nur quer zur Rotationsrichtung des Reifens R erzeugte Luftströme bzw. deren Strömungskomponenten erkennbar. In allen gezeigten Ausführungsbeispielen der Figur 8 stellt sich zudem ein Luftstrom in Umfangsrichtung des Reifens R ein.

In Figur 8a weist die Ventilationslage V dieselbe Breite auf wie der Schalldämpfungseinsatz S. Diese Einheit ist weniger breit als die von dem Reifen R bereitgestellte Innenbreite. Aus diesem Grunde begrenzen die in Figur 8a erkennbaren Seitenflächen den Reifenhohlraum, sodass die in Figur 8a gezeigten Querluftströme generiert werden können.

Figur 8b entspricht im Wesentlichen dem bereits in Figur 1 gezeigten Ausführungsbeispiel.

In Figur 8c ist eine asymmetrische Anordnung einer aus einer Ventilationslage V und einem Schalldämpfungseinsatz S gebildeten Einheit gezeigt. Asymmetrisch ist die Anordnung, da diese außermittig bezogen auf die Mittellängsebene des Reifens R angeordnet ist. Wie in Figur 8c eingezeichnet, kann bei einer solchen Ausgestaltung eine Luftströmungswalze ausgebildet werden.

In Figur 8d ist die Ventilationslage V der in den Reifen R eingesetzten Einheit mit einer asymmetrischen Dicke konzipiert. Die Dicke der Ventilationslage ist an ihrer einen Seite (in der Figur rechts) größer als an ihrer anderen Seite (in der Figur links). Die Dicke nimmt kontinuierlich ab. Dem entsprechend komplementär ist die Dicke des in diesem Ausführungsbeispiel gezeigten Schalldämpfungseinsatzes S, sodass die aus der Ventilationslage V und dem Schalldämpfungseinsatz S gebildete Einheit insgesamt einen rechteckförmigen Querschnitt aufweist. Aufgrund dieses Konzeptes der ausbildenden Ventilationslage V wird sich typischer Weise ein in eine Richtung (hier: nach rechts) gerichteter Querluftstrom einstellen. Im Unterschied hierzu stellt sich bei dem Ausführungsbeispiel der Figur 8a ein Querluftstrom bzw. eine Querluftstromkomponente in beide Richtungen, d. h. in der Figur nach links und nach rechts ein.

Figur 8e zeigt eine weitere Ausgestaltung, die hinsichtlich der Luftstromgenerierung ähnlich ist, wie diejenige der Figur 8a. Die Ventilationslage V dieses Ausführungsbeispieles ist zur Mitte hin tailliert und nimmt von der Mitte in Richtung zu den beiden seitlichen Abschlüssen hin zu.

Figur 8f zeigt noch eine weitere Ausgestaltung, die vom Prinzip der derjenigen der Figur 8a entspricht. Bei diesem Ausführungsbeispiel ist die Ventilationslage V breiter als der Schalldämpfungseinsatz S. Der Schalldämpfungseinsatz S befindet sich bei diesem Ausführungsbeispiel mittig auf der Ventilationslage V. In einer Weiterbildung eines solchen allgemeinen Ausführungsbeispiels kann vorgesehen sein, dass die Ventilationslage V über ihren Umfang in Drehrichtung des Reifens gesehen quer zur Drehrichtung des Reifens Vorsprünge aufweist, durch in den generierten Luftstrom Turbulenzen eingebracht werden. Bei dem dargestellten Ausführungsbeispiel sind die Vorsprünge als abgewinkelte Fortsätze konzipiert, wobei die Abwinklungen gegen der Strömungsrichtung der Luft in dem Reifeninneren gerichtet ist. Das Verursachen einer turbulenten Luftströmung im Reifeninneren begünstigt die Wärmeabfuhr von der Innenseite des Laufstreifens in das Innere des Reifens hinein.

Figur 8g zeigt ein Ausführungsbeispiel, welches ähnlich ist wie dasjenige der Figur 8f. Bei dem Ausführungsbeispiel der Figur 8g weist die Ventilationslage V eine geringere Breite auf als der Schalldämpfungseinsatz 2. Die Ventilationslage V ist bei diesem Ausführungsbeispiel mittig in Bezug auf die Innenseite des Laufstreifens und in Bezug auf den Schalldämpfungseinsatz S angeordnet. Der Schalldämpfungseinsatz S weist bei dem Ausführungsbeispiel der Figur 8g eine Geometrie auf, wie dieses zu der Ventilationslage V im Ausführungsbeispiel der Figur 8f beschrieben worden ist. Bei dieser Ausgestaltung wird zusätzlich zu dem Erzeugen von Turbulenzen in dem im Reifeninneren strömenden Luftstrom die Oberfläche des Schalldämpfungseinsatz S vergrößert, mithin der Schalldämpfungseffekt zusätzlich verbessert.

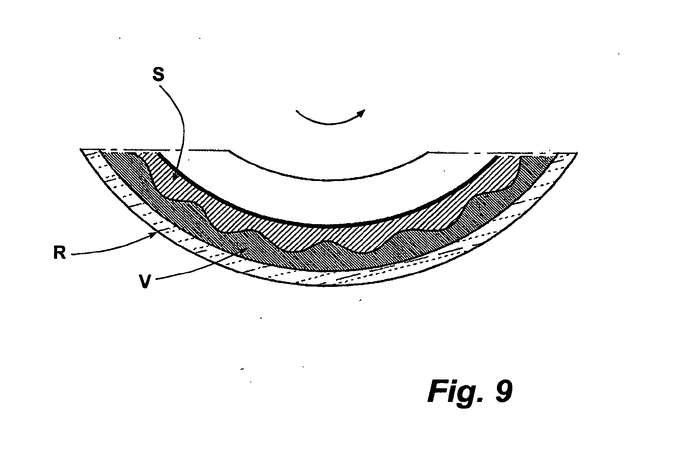

Noch ein weiteres Ausführungsbeispiel einer in einem Fahrzeugreifen R eingesetzten Einheit bestehend aus einer Ventilationslage V und einem Schalldämpfungseinsatz S ist in Figur 9 gezeigt. Bei dieser Ausgestaltung weist der Schalldämpfungseinsatz S in Richtung zur Innenseite des Reifens R weisend eine gewellte Struktur auf. Diese wird aufgefüllt durch eine entsprechend komplementär gewellte Struktur an der Ventilationslage V. Durch eine solchermaßen konzipierte Struktur des Schalldämpfungseinsatzes S ist die für die Zwecke der Schalldämpfung wirksame Oberfläche desselben merklich erhöht, mithin der Schalldämpfungseffekt verbessert.

Bei allen beschriebenen Ausführungsbeispielen ist die peristaltische Pumpentätigkeit des Reifens durch seine Deformation im Zuge des Abrollvorganges für die Generierung des Luftstromes verantwortlich, die zur Erzeugung des zur Kühlung der Innenseite des Fahrzeugreifens vorgesehenen Luftstromes geschickt genutzt wird.

Die in den vorbeschriebenen Ausführungsbeispielen verwendeten Ventilationslagen sind solche aus einem retikulierten Polyurethanschaum. Bei derartigen Schäumen handelt es sich um zunächst als offenporige Schäume hergestellte Körper mit einem Gerüst, das aus relativ stabilen Fasern besteht, die durch dünne Membrane, so genannte Fenster verbunden sind. Letztere bilden die Zellwände. Das Retikulieren betrifft Verfahren, diese Zellwände zu entfernen oder zu öffnen, mithin die Durchströmungswegsamkeit zu vergrößern. Hierzu sind unterschiedliche chemische und thermische Verfahren bekannt. Diese sind beispielsweise in US 3,405,217, US 3,423,338, US 3,425,890 oder US 4,670,477 beschrieben.

Ohne den Umfang der Ansprüche zu verlassen, ergeben sich für einen Fachmann zahlreiche weitere Ausgestaltungsmöglichkeiten, die Erfindung verwirklichen zu können, ohne dass dieses im Einzelnen im Rahmen dieser Ausführung beschrieben werden müsste. Dieses betrifft beispielsweise die Kombination einzelner, zu jeweils einem Ausführungsbeispiel erläuterter Merkmale der Erfindung.

### Bezugszeichenliste

- 1: Fahrzeugreifen
- 2: Laufstreifen
- 3: Lauffläche
- 4, 4.1: Seitenwand
- 5, 5.1: Wulst
- 6: Felge
- 7: Rad
- 8, 8.1: Felgenhorn
- 9: Schaumeinlage
- 10: Innenseite
- 11: Hohlraum
- 12, 12.1: Seitenwandabschnitt
- 13: Ventilationslage
- 14: Durchbrechung
- 15: Ventilationslage
- 16: Schalldämpfungseinsatz
- 17: Ventilationslage
- 18: Schalldämpfungseinsatz
- 19: Schalldämpfungseinsatz
- 20: Ventilationslage
- 21: Ventilationslage
- 22: Schalldämpfungseinsatz
- 23: Ventilationslage
- 24: Schalldämpfungseinsatz
- 25: Schalldämpfungseinsatzanordnung
- 26: Ventilationslage
- 27: Schalldämpfungseinsatz
- 28: Ventilationslage
- 29: Schalldämpfungseinsatz
- 30: Ventilationslage
- A: Aufstandsfläche
- R: Reifen
- P: Öffnung (Perforierung)
- S: Schalldämpfungseinsatz
- V: Ventilationslage

## Patentansprüche

1. Elastischer Fahrzeugreifen mit einem Hohlraum, eingefasst durch einen die Lauffläche (3) tragenden Laufstreifen (2) und einer an jeder Seite des Laufstreifens (2) angeformten Seitenwand (4, 4.1), und mit zumindest einem in dem Reifenhohlraum angeordneten schalldämpfenden Einsatz (9, 16, 18, 19, 22, 24, 29, S) oder einer in dem Reifenhohlraum angeordneten schalldämpfenden Einsatzanordnung (25, 27), wobei zwischen dem Schalldämpfungseinsatz (9, 16, 18, 19, 22, 24, 29, S) oder der Schalldämpfungseinsatzanordnung (25) und der Innenseite (10) des die Lauffläche (3) tragenden Laufstreifens (2) eine sich in Umfangsrichtung des Laufstreifens (2) erstreckende, zumindest in Quer- und/oder Längsrichtung des Laufstreifens (2) luftdurchströmbaren Struktur angeordnet ist, **dadurch gekennzeichnet, dass** es sich bei der Struktur um eine Ventilationslage (13, 15, 17, 20, 21, 23, 26, 28, 30, V) handelt, die über keine nennenswerten schalldämpfenden Eigenschaften verfügt und die zum Durchlassen eines zumindest teilweise in Kontakt mit der Innenwand (10) des Laufstreifens (2) stehenden Luftstroms vorgesehen ist.

2. Reifen nach Anspruch 1, **dadurch gekennzeichnet, dass** die Ventilationslage (13, 15, 17, 20, 21, 23, 26, 28, 30, V) zumindest in radialer Richtung elastische Eigenschaften aufweist.

3. Reifen nach Anspruch 2, **dadurch gekennzeichnet, dass** die Ventilationslage (13, 15, 17, 20, 21, 23, 26, 28, 30, V) in luftdurchströmbarer Verbindung mit dem Restreifenhohlraum (11) steht und derart leichter als der Schalldämpfungseinsatz (9 , 16, 18, 19, 22, 24, 29, S) deformierbar ist, dass beim Abrollen des Reifens (1, R) auf einem Untergrund nach dem Prinzip einer peristaltischen Pumpe in der Ventilationslage (13, 15, 17, 20, 21, 23, 26, 28, 30, V) ein Luftstrom generiert wird.

4. Reifen nach einem der Ansprüche 1 bis 3, **dadurch gekennzeichnet, dass** die Ventilationslage (13, 15, 17,20, 21, 23, 26, 28, 30, V) gemessen nach EN/ISO 9237 für eine Probendicke von 1 cm auf einer Querschnittfläche von 1 dm² eine Luftdurchlässigkeit von größer als 500 l/min und bevorzugt 1000 l/min aufweist.

5. Reifen nach Anspruch 3 oder 4, **dadurch gekennzeichnet, dass** der Schalldämpfungseinsatz (9) oder die Schalldämpfungseinsatzanordnung Durchbrüche (14) zum Ausbilden einer Luftstromverbindung zwischen der Ventilationslage (13) und dem Restreifenhohlraum (11) aufweist.

6. Reifen nach einem der Ansprüche 3 bis 5, **dadurch gekennzeichnet, dass** die Ventilationslage (15, 17, 20, V) selbst mit einem Teil ihrer Oberfläche den vorhandenen Restreifenhohlraum begrenzt.

7. Reifen nach einem der Ansprüche 1 bis 6, **dadurch gekennzeichnet, dass** die Ventilationslage zumindest teilweise aus einem wärmeleitenden Material, etwa aus Metallfaser, ggfs. zu einem Metallvlies miteinander verbunden, oder einem Metallgestrick gebildet ist.

8. Reifen nach einem der Ansprüche 1 bis 7, **dadurch gekennzeichnet, dass** die Ventilationslage (13, 15, 17, 20, 21, 23, 26, 28, 30, V) als offenporiger Schaumkörper ausgeführt ist.

9. Reifen nach Anspruch 8, **dadurch gekennzeichnet, dass** die Ventilationslage (13, 15, 17, 20, 21, 23, 26, 28, 30, V) als offenporiger Polyurethanschaumkörper, insbesondere als Retikulärschaumkörper ausgeführt ist.

10. Reifen nach einem der Ansprüche 1 bis 9, **dadurch gekennzeichnet, dass** die Ventilationslage (V) in Umfangsrichtung umlaufend ausgeführt ist und hierdurch eine an der Innenseite des Laufstreifens angeordnete umlaufende Luftströmungswegsamkeit bereitgestellt ist.

11. Reifen nach einem der Ansprüche 1 bis 10, **dadurch gekennzeichnet, dass** die Ventilationslage (15, 17, 20, V) eine Erstreckung in Querrichtung zur Umfangsrichtung aufweist, die im Wesentlichen der Breite der Lauffläche (3) entspricht.

12. Reifen nach einem der Ansprüche 1 bis 11, **dadurch gekennzeichnet, dass** der Schalldämpfungseinsatz (18, 19) in das Material der Ventilationslage (17, 20) eingebetet ist.

13. Reifen nach Anspruch 12, **dadurch gekennzeichnet, dass** die aus Schalldämpfungseinsatz (19) und Ventilationslage (20) gebildete Einheit unter einer gewissen Vorspannung stehend kraftschlüssig an der Innenseite des Reifens (R) anliegt.

14. Reifen nach einem der Ansprüche 1 bis 13, **dadurch gekennzeichnet, dass** mehrere parallel zueinander angeordnete Ventilationslagen (30) vorgesehen sind.

15. Reifen nach einem der Ansprüche 1 bis 11, **dadurch gekennzeichnet, dass** die Einheit, gebildet aus einer Ventilationslage (V) und einem Schalldämpfungseinsatz (S) im Bezug auf die Mittellängsebene des Reifens (R) außermittig angeordnet ist.

16. Reifen nach einem der Ansprüche 1 bis 15, **dadurch gekennzeichnet, dass** zwischen der Ventilationslage und der Innenseite des Laufstreifens eine thermisch leitende Lage zum Abführen von Wärme von der Innenseite des Laufstreifens in den Reifenhohlraum angeordnet ist, welche thermisch leitenden Lage zumindest abschnittsweise in den Reifenhohlraum zum Abstrahlen von Wärme reicht.

## Claims

1. Elastic vehicle tyre with a cavity, enclosed by a running strip (2) supporting the tread (3) and a side wall (4, 4.1) formed on each side of the running strip (2), and with at least one noise-dampening insert (9, 16, 18, 19, 22, 24, 29, S) disposed in the tyre cavity or a noise-dampening insert arrangement (25, 27) disposed in the tyre cavity, wherein a structure which is air-permeable at least in the transverse and/or longitudinal direction of the running strip (2) and extends in the circumferential direction of the running strip (2) is disposed between the noise-dampening insert ((9, 16, 18, 19, 22, 24, 29, S) or noise-dampening insert arrangement (25) and the inside (10) of the running strip (2) supporting the tread (3), **characterised in that** the structure is a ventilation layer (13, 15, 17, 20, 21, 23, 26, 28, 30, V) which has no significant noise-dampening properties and is provided for allowing the passage of an air flow which is at least partially in contact with the inner wall (10) of the running strip (2).

2. Tyre according to claim 1, **characterised in that** the ventilation layer (13, 15, 17, 20, 21, 23, 26, 28, 30, V) has elastic properties at least in the radial direction.

3. Tyre according to claim 2, **characterised in that** the ventilation layer (13, 15, 17, 20, 21, 23, 26, 28, 30, V) is in air-permeable connection with the remaining tyre cavity (11) and is more easily deformable than the noise-dampening insert (9, 16, 18, 19, 22, 24, 29, S) such that on rolling of the tyre (1, R) on the ground, an air flow is generated in the ventilation layer (13, 15, 17, 20, 21, 23, 26, 28, 30, V) according to the principle of a peristaltic pump.

4. Tyre according to any one of claims 1 to 3, **characterised in that** the ventilation layer (13, 15, 17, 20, 21, 23, 26, 28, 30, V) has an air-permeability of more than 500 l/min and preferably 1000 l/min when measured according to EN/ISO 9237 for a specimen thickness of 1 cm over a cross-section area of 1 dm².

5. Tyre according to claim 3 or 4, **characterised in that** the noise-dampening insert (9) or noise-dampening insert arrangement comprises openings (14) for forming an air-flow connection between the ventilation layer (13) and the remaining tyre cavity (11).

6. Tyre according to any one of claims 3 to 5, **characterised in that** the ventilation layer (15, 17, 20, V) itself with a part of its surface delimits the remaining tyre cavity present.

7. Tyre according to any one of claims 1 to 6, **characterised in that** the ventilation layer is made at least partly from a heat-conductive material such as metal fibres, where applicable bonded together into a metal fleece, or a metal fabric.

8. Tyre according to any one of claims 1 to 7, **characterised in that** the ventilation layer (13, 15, 17, 20, 21, 26, 23, 28, 30, V) is produced as an open-pore foam body.

9. Tyre according to claim 8, **characterised in that** the ventilation layer (13, 15, 17, 20, 21, 23, 26, 28, 30, V) is produced as an open-pore polyurethane foam body, in particular a reticular foam body.

10. Tyre according to any one of claims 1 to 9, **characterised in that** the ventilation layer (V) is designed looped in the circumferential direction and thus provides an air flow mobility arranged circumferentially on the inside of the running strip.

11. Tyre according to any one of claims 1 to 10, **characterised in that** the ventilation layer (15, 17, 20, V) has an extension, in a direction transverse to the circumferential direction, which substantially corresponds to the width of the tread surface (3).

12. Tyre according to any one of claims 1 to 11, **characterised in that** the noise-dampening insert (18, 19) is embedded in the material of the ventilation layer (17, 20).

13. Tyre according to claim 12, **characterised in that** under a certain pretension, the unit formed from the noise-dampening insert (19) and ventilation layer (20) lies with force fit on the inside of the tyre (R).

14. Tyre according to any one of claims 1 to 13, **characterised in that** several ventilation layers (30) are provided which are arranged parallel to each other.

15. Tyre according to any one of claims 1 to 11, **characterised in that** the unit formed from the ventilation layer (V) and a noise-dampening insert (S) is arranged eccentrically in relation to the centre longitudinal plane of the tyre (R).

16. Tyre according to any one of claims 1 to 15, **characterised in that** a thermally conductive layer is arranged between the ventilation layer and the inside of the running strip to dissipate heat from the inside of the running strip into the tyre cavity, which thermally conductive layer extends at least in portions into the tyre cavity for dissipating heat.

## Revendications

1. Pneumatique élastique pour véhicule comportant un espace creux entouré par une bande de roulement (2) supportant la surface de roulement (3) et une paroi latérale (4, 4.1) moulée de chaque côté de la bande de roulement (2), et avec au moins un insert (9, 16, 18, 19, 22, 24, 29, S) isolant phonique disposé dans l'espace creux du pneumatique ou un agencement d'insert (25, 27) isolant phonique disposé dans l'espace creux du pneumatique, une structure permettant le passage de l'air étant disposée étendue dans le sens périphérique de la bande de roulement (2), au moins dans le sens transversal et/ou longitudinal de la bande de roulement (2), entre l'insert (9, 16, 18, 19, 22, 24, 29, S) isolant phonique ou l'agencement d'insert (25) isolant phonique et la face interne (10) de la bande de roulement (2) supportant la surface de roulement (3), **caractérisé en ce que** la structure est une couche de ventilation (13, 15, 17, 20, 21, 23, 26, 28, 30, V) qui ne dispose pas de caractéristiques isolantes phoniques notables et qui est prévue pour laisser passer un flux d'air au moins partiellement en contact avec la paroi interne (10) de la bande de roulement (2).

2. Pneumatique selon la revendication 1, **caractérisé en ce que** la couche de ventilation (13, 15, 17, 20, 21, 23, 26, 28, 30, V), présente au moins dans le sens radial des caractéristiques élastiques.

3. Pneumatique selon la revendication 2, **caractérisé en ce que** la couche de ventilation (13, 15, 17, 20, 21, 23, 26, 28, 30, V) est en liaison d'échange de flux d'air avec l'espace creux (11) du reste du pneumatique et est légèrement plus déformable que l'insert (9, 16, 18, 19, 22, 24, 29, S) isolant phonique, de telle sorte que lors du déroulement du pneumatique (1, R) sur un support, un flux d'air est généré dans la couche de ventilation (13, 15, 17, 20, 21, 23, 26, 28, 30, V) selon le principe d'une pompe péristaltique.

4. Pneumatique selon l'une des revendications 1 à 3, **caractérisé en ce que** la couche de ventilation (13, 15, 17, 20, 21, 23, 26, 28, 30, V), mesurée selon EN/ISO 9237 pour une épaisseur d'échantillon de 1 cm sur une surface de section de 1 dm², présente une perméabilité à l'air supérieure à 500 l/min et de préférence 1000 l/min.

5. Pneumatique selon la revendication 3 ou 4, **caractérisé en ce que** l'insert (9) isolant phonique ou l'agencement d'insert présente des percées (14) afin de créer une connexion de flux d'air entre la couche de ventilation (13) et l'espace creux (11) du reste du pneumatique.

6. Pneumatique selon l'une des revendications 3 à 5, **caractérisé en ce que** la couche de ventilation (15, 17, 20 V) limite elle-même, par une partie de sa surface, l'espace creux existant du reste du pneumatique.

7. Pneumatique selon l'une des revendications 1 à 6, **caractérisé en ce que** la couche de ventilation est constituée, du moins partiellement, d'un matériau thermoconducteur, par exemple de fibres métalliques, éventuellement reliées entre elles sous la forme d'un voile métallique ou d'un maillage métallique.

8. Pneumatique selon l'une des revendications 1 à 7, **caractérisé en ce que** la couche de ventilation (13, 15, 17, 20, 21, 23, 26, 28, 30, V) est conformée en corps en mousse à pores ouvertes.

9. Pneumatique selon la revendication 8, **caractérisé en ce que** la couche de ventilation (13, 15, 17, 20, 21, 23, 26, 28, 30, V) est conformée en corps en mousse polyuréthane à pores ouvertes, notamment en corps en mousse réticulée.

10. Pneumatique selon l'une des revendications 1 à 9, **caractérisé en ce que** la couche de ventilation (V) est conformée de façon circonférentielle dans le sens périphérique et qu'une voie circonférentielle de circulation d'air, disposée sur la face interne de la bande de roulement, est ainsi mise à disposition.

11. Pneumatique selon l'une des revendications 1 à 10, **caractérisé en ce que** la couche de ventilation (15, 17, 20, V) présente une étendue dans le sens transversal par rapport au sens périphérique, qui correspond sensiblement à la largeur de la surface de roulement (3).

12. Pneumatique selon l'une des revendications 1 à 11, **caractérisé en ce que** l'insert (18, 19) isolant phonique est encastré dans le matériau de la couche de ventilation (17, 20).

13. Pneumatique selon la revendication 12, **caractérisé en ce que** l'unité formée par l'insert (19) isolant phonique et la couche de ventilation (20) est, avec une certaine précontrainte, en appui par friction contre la face interne du pneumatique (R).

14. Pneumatique selon l'une des revendications 1 à 13, **caractérisé en ce que** plusieurs couches de ventilation (30) disposées parallèlement les unes par rapport aux autres sont prévues.

15. Pneumatique selon l'une des revendications 1 à 11 **caractérisé en ce que** l'unité formée par une couche de ventilation (V) et un insert (S) isolant phonique est disposée de façon excentrée par rapport au plan médian longitudinal du pneumatique (R).

16. Pneumatique selon l'une des revendications 1 à 15, **caractérisé en ce qu'**une couche thermoconductrice prévue pour évacuer la chaleur provenant de la face interne de la bande de roulement vers l'espace creux du pneumatique est disposée entre la couche de ventilation et la face interne de la bande de roulement, laquelle couche thermoconductrice suffit au moins sur certains tronçons à évacuer la chaleur par rayonnement vers l'espace ceux du pneumatique.
